(19) **Europäisches Patentamt / European Patent Office / Office européen des brevets**

(11) **EP 1 811 009 A1**

(12) **EUROPEAN PATENT APPLICATION**
published in accordance with Art. 158(3) EPC

(43) Date of publication:
**25.07.2007 Bulletin 2007/30**

(51) Int Cl.:
***C09K 11/59*** (2006.01)

(21) Application number: **05781904.7**

(22) Date of filing: **31.08.2005**

(86) International application number:
**PCT/JP2005/016370**

(87) International publication number:
**WO 2006/028104 (16.03.2006 Gazette 2006/11)**

(84) Designated Contracting States:
**NL**

(30) Priority: **07.09.2004 JP 2004259337**
**28.09.2004 JP 2004281057**
**15.06.2005 JP 2005174715**

(71) Applicant: **Sumitomo Chemical Company, Limited**
**Tokyo 104-8260 (JP)**

(72) Inventors:
• **KUZE, Satoru**
**3050821 (JP)**

• **ONO, Keiji**
**1760013 (JP)**
• **MIYAZAKI, Susumu**
**3001525 (JP)**
• **IMANARI, Yuichiro**
**3050005 (JP)**
• **ISOBE, Toshinori**
**3050821 (JP)**

(74) Representative: **Lips, Hendrik Jan George**
**HAAGSCH OCTROOIBUREAU**
**Breitnerlaan 146**
**2596 HG Den Haag (NL)**

(54) **PHOSPHOR, PHOSPHOR PASTE AND LIGHT-EMITTING DEVICE**

(57) Disclosed are a phosphor, a phosphor paste, and a light-emitting device. The phosphor comprises a compound represented by the formula (1):

$$Ca_aSr_bEu_{1-a-b}MgSi_2O_6 \qquad (1)$$

wherein $0.4 \leqq a \leqq 0.7$, $0.4 \leqq b \leqq 0.7$, and $a+b \leqq 0.990$. The phosphor paste comprises the above phosphor and an organic compound. The light-emitting device comprises the above phosphor and an electrode.

**EP 1 811 009 A1**

**Description**

TECHNICAL FIELD

The present invention relates to a phosphor, a phosphor paste, and a light-emitting device.

BACKGROUND ART

A phosphor is applied to various light-emitting devices including vacuum ultraviolet excited light-emitting devices such as plasma display panel (hereinafter referred to as "PDP") and rare gas lamp, and known is a phosphor containing aluminate or silicate such as $BaMgAl_{10}O_{17}$ : Eu, $CaMgSi_2O_6$:Eu (IEICE Transaction on Electronics Special Issue on Electronic Displays, The Institute of Electronics, Information and Communication Engineers E-85-C, Nov. 2002, p.1888 to 1894), $BaCa_2MgSi_2O_8$:Eu (JP 2004-26922), $Ca_{0.9215}Sr_{0.0485}Eu_{0.03}MgSi_2O_6$ (JP 2002-332481).

In view of enhancing the performance of light-emitting devices, however, a phosphor having excellent brightness properties is desired.

DISCLOSURE OF THE INVENTION

An object of the invention is to provide a phosphor having excellent brightness. Another object of the invention is to provide a phosphor paste and light-emitting device containing such phosphor.

The present inventors, to solve the above-mentioned problems, have studied to enhance the brightness of phosphors and completed the present invention.

That is, the present invention provides a phosphor I comprising a compound represented by the formula (1):

$$Ca_aSr_bEu_{1-a-b}MgSi_2O_6 \qquad (1)$$

wherein $0.4 \leqq a \leqq 0.7$, $0.4 \leqq b \leqq 0.7$, and $a+b \leqq 0.990$.

The present invention provides a phosphor II comprising a compound represented by the formula (2) and Eu as an activator:

$$3(M^1O)\cdot m(M^2O)\cdot n(M^3O_2) \qquad (2)$$

wherein $M^1$ is at least one selected from the group consisting of Ca, Sr, and Ba;
$M^2$ is at least one selected from the group consisting of Mg and Zn;
$M^3$ is at least one selected from the group consisting of Si and Ge;

$$1 \leqq m \leqq 1.5;$$

$$2 \leqq n \leqq 2.6;$$

and

$$m+n > 3.$$

The present invention also provides a phosphor paste comprising the phosphor I or phosphor II, and an organic compound.

The present invention further provides a light-emitting device comprising the phosphor I or phosphor II, and an electrode.

The phosphor I of the present invention emits highly bright light after being excited with an irradiation of vacuum ultraviolet, thereby is suitable for a light-emitting device requiring an amount of light. The phosphor II of the present invention has a small decrease in brightness and has small brightness change across the ages even if being exposed to a plasma or vacuum ultraviolet, thereby is suitable for a light-emitting device requiring long time use.

BRIEF DESCRIPTION OF DRAWINGS

Fig. 1 shows relations between brightness ratio (= brightness after vacuum ultraviolet irradiation treatment /initial brightness $L_o$) and an irradiation time of an ultraviolet for the phosphors of References 3, 4, and 5 and Examples 5 and 7.

Fig. 2 shows X-ray diffraction patterns of the phosphors of Reference 3, and Examples 7 and 8.

Fig. 3 shows X-ray diffraction patterns of the phosphors of Example 5, Reference 4, and Example 9.

Fig. 4 shows X-ray diffraction patterns (enlarged views) of the phosphors of Example 5, Reference 4, and Example 9.

BEST MODE FOR CARRYING OUT THE INVENTION

**Phosphor I**

The phosphor I of the present invention includes the compound represented by the above-mentioned formula (1).

In the formula (1), a is 0.4 or more, preferably 0.46 or more, and more preferably 0.47 or more; and 0.7 or less, preferably 0.53 or less, and more preferably 0.52 or less.

b is 0.4 or more, preferably 0.46 or more, and more preferably 0.47 or more; and 0.7 or less, preferably 0.53 or less, and more preferably 0.52 or less.

Furthermore, a is preferably equal to b.

The sum of a and b is 0.990 or less. In view of obtaining a phosphor having higher brightness, the sum of a and b is preferably more than 0.9 and 0.990 or less ($0.01 \leqq 1-a-b < 0.1$; the term of "1-a-b" refers to an amount of Eu as an activator), and more preferably 0.98 or more and 0.990 or less ($0.010 \leqq 1-a-b \leqq 0.02$).

The phosphor I is excited with an irradiation of vacuum ultraviolet having wavelength of 200 nm or less (wavelength such as 147 nm and 172 nm) generated, for example, by discharging a plasma of Xe, emitting a highly bright blue. Since the phosphor I also has a small decrease in brightness which is caused by temperature raising, it can serve as a vacuum ultraviolet-excited light-emitting device, and still emit light highly brightly after the temperature of the phosphor becomes higher (for example, 100°C); according to this reason, it is suitable for a vacuum ultraviolet-excited light-emitting device such as PDP, rare gas lamp.

The phosphor I, for example, may be prepared by calcining a mixture of metal oxides, which can be converted to a compound represented by the formula (1).

Examples of the metal compound include calcium compound, strontium compound, europium compound, magnesium compound, and silicon compound.

The calcium compound is a compound, which can be converted into oxide by decomposition at a high temperature, such as hydroxide, carbonate, nitrate, halide, and oxalate having a purity of 99% or more; or is an oxide having a purity of 99.9% or more.

The strontium compound is a compound, which can be converted into oxide by decomposition at a high temperature, such as hydroxide, carbonate, nitrate, halide, and oxalate having a purity of 99% or more; or is an oxide having a purity of 99.9% or more.

The europium compound is a compound, which can be converted into oxide by decomposition at a high temperature, such as hydroxide, carbonate, nitrate, halide, and oxalate having a purity of 99% or more; or is an oxide having a purity of 99.9% or more.

The magnesium compound is a compound, which can be converted into oxide by decomposition at a high temperature, such as hydroxide, carbonate, nitrate, halide, and oxalate having a purity of 99% or more; or is an oxide having a purity of 99.9% or more.

The silicon compound is a compound, which can be converted into oxide by decomposition at a high temperature, such as hydroxide, carbonate, nitrate, halide, and oxalate having a purity of 99% or more; or is an oxide having a purity of 99 . 9% or more.

The metal compound may be a complex salt containing at least two selected from the group consisting calcium compound, strontium compound, europium compound, magnesium compound, and silicon compound.

These compounds are typically weighed to Ca:Sr:Eu:Mg:Si =a:b:(1-a-b):1:2 ($0.4 \leq a \leq 0.7$, $0.4 \leq b \leq 0.7$, $a+b \leq 0.990$, in molar ratio), and then mixed. For example, when a phosphor I containing a compound represented by $Ca_{0.47}Sr_{0.47}Eu_{0.06}MgSi_2O_6$ is produced, $CaCO_3$, $SrCO_3$, $Eu_2O_3$, MgO, and $SiO_2$ are weighed to Ca:Sr:Eu:Mg:Si=0.47: 0.47:0.06:1:2 in molar ratio, and then mixed. The mixing may be conducted by using ball mill, and V-shape blender or agitator.

The calcination may be conducted at 900 °C or more, preferably 1000 °C or more, and more preferably 1100 °C or more; and 1500 °C or less, preferably 1200 °C or less, and more preferably 1160 °C or less; and for 0.3 hours or more, and preferably 1 hour or more; and 100 hours or less, and more preferably 10 hours or less. The calcination is preferably conducted under a reduction atmosphere, for example, preferably under an atmosphere of nitrogen containing hydrogen of about 0.1% by volume to about 10% by volume or of argon containing hydrogen of about 0.1% by volume to about 10% by volume. Before calcination, the mixture of the metal compounds may be added with an appropriate amount of carbon. The addition of the carbon allows to conduct the calcination under a strong reduction atmosphere.

To enhance crystallinity of the phosphor, the mixture of the metal compounds may be added with an appropriate amount of flux (for example, $NH_4Cl$) before calcination. The calcination may be conducted twice or more. By calcining twice or more, the phosphor having high brightness is obtained.

When the metal compound is the compound, which can be converted into oxide by decomposition at a high temperature, such as hydroxide, carbonate, nitrate, halide, and oxalate having a purity of 99% or more; or is the oxide having a purity of 99.9% or more, the metal compound may be pre-calcined before calcination. The calcination may be conducted under conditions of converting the metal compounds into an oxide thereof or of removing crystal water thereof, for example, may be maintained at temperatures of 400 °C or more and less than the calcination temperature. The calcination may be conducted under any of an inert gas atmosphere, an oxidative atmosphere such as an ambient atmosphere, and a reduction atmosphere.

The product obtained by calcination may be ground. Grinding may be conducted, for example, by using ball mill and jet-mill. Moreover, the product may be washed or classified.

**Phosphor II**

The phosphor II of the present invention includes a compound represented by the formula (2) and Eu as an activator.

In the formula (2), $M^1$ is Ca, Sr, and Ba; preferably combination of Ca and Sr, combination of Ca and Ba, combination of Sr and Ba, and combination of Ca, Sr and Ba; and more preferably combination of Sr and Ba, and combination of Ca, Sr and Ba.

$M^2$ is Mg and Zn, and preferably Mg.

$M^3$ is Si and Ge, preferably Si.

m is 1 or more and 1.5 or less, and n is 2 or more and 2.6 or less.

The sum of m and n is more than 3. The sum of m and n, in view of delaying the decrease in brightness under exposure to a plasma or vacuum ultraviolet, is preferably 3.01 or more, more preferably 3.02 or more, and even more preferably 3.05 or more; and typically 3.5 or less, preferably 3.2 or less, and more preferably 3.15 or less.

The compound represented by the formula (2) is sometimes called as a mother crystal. A phosphor II containing the mother crystal and the activator emits light with excitation of an irradiation of a vacuum ultraviolet and the like, and has a small decrease in brightness under exposure to a plasma or vacuum ultraviolet.

The phosphor II includes a compound containing a compound represented by the formula (2) and Eu as an activator, and particularly preferably the compound represented by the formula (3) in view of having high brightness when being excited with a vacuum ultraviolet and delaying the decrease in brightness under exposure to a plasma or vacuum ultraviolet:

$$(M^1_{3-a}Eu_a)Mg_{1+b}Si_{2+c}O_{8+b+2c} \qquad (3).$$

In the formula (3), $M^1$ is Ca, Sr, and Ba; preferably combination of Ca and Sr, combination of Ca and Ba, combination of Sr and Ba, and combination of Ca, Sr and Ba; and more preferably combination of Sr and Ba, and combination of Ca, Sr and Ba.

a is more than 0, preferably 0.0001 or more, more preferably 0.001 or more, and even more preferably 0.005 or more; and 0.5 or less, preferably 0.3 or less, more preferably 0.3 or less, and even more preferably 0.1 or less.
b is 0 or more, preferably 0.005 or more, more preferably 0.01 or more, and even more preferably 0.03 or more; and 0.5 or less, preferably 0.3 or less, more preferably 0.2 or less, and even more preferably 0.15 or less.
c is 0 or more, preferably 0.03 or more, and more preferably 0.05 or more; and 0. 6 or less, preferably 0.4 or less, and more preferably 0.3 or less.

The sum of b and c is more than 0. The sum of b and c, in view of delaying the decrease in brightness under exposure to a plasma or vacuum ultraviolet, is preferably 0.01 or more, more preferably 0.02 or more, and even more preferably 0.05 or more; and preferably 0.5 or less, more preferably 0.2 or less, and even more preferably 0.15 or less.

It is further preferable that both of b and c are more than 0.

Of the phosphor II it is preferable that, in a powder X-ray diffraction pattern determined by a powder X-ray diffractometer having a CuKα radiation source with a scanning range of 10° to 50° in terms of diffraction angle 2θ, a maximum diffraction peak having a strongest intensity is present in a range of 32° to 33.5° in terms of diffraction angle 2θ, and no peaks are substantially present in a range of 29° to 31° in terms of diffraction angle 2θ.

"No peaks are substantially present in a range of 29° to 31° in terms of diffraction angle 2θ" means, for example, when the intensity of the maximum diffraction peak present in a range of 32° to 33.5° in terms of diffraction angle 2θ is referred to $I_p$ and the intensity of the peak present in a range of 29° to 31° in terms of diffraction angle 2θ is referred to $I_i$, that $I_i/I_p$, i.e. the ratio of $I_i$ to $I_i$, is 0.001 or less.

The phosphor II may further include A1, Sc, Y, La, Gd, Ce, Pr, Nd, Sm, Tb, Dy, Ho, Er, Tm, Yb, Lu, Bi, or Mn as a co-activator. The co-activator may be used alone or in combination thereof. An amount of the co-activator is typically 100 ppm or more and 50000 ppm or less based on the total amount of the phosphor.

The phosphor II, for example, may be prepared by calcining a mixture of the metal compounds, which can be converted into the compound containing the compound represented by the formula (2) and the co-activator by calcination.

Examples of the metal compounds include compounds of barium, strontium, calcium, magnesium, zinc, silicon, germanium, aluminum, scandium, yttrium, lanthanum, gadolinium, cerium, praseodymium, neodymium, samarium, europium, terbium, dysprosium, holmium, erbium, thulium, ytterbium, ruthenium, bismuth, or manganese. Examples of the metal compound include oxide thereof, compound such as hydroxide, carbonate, nitrate, chloride, oxalate thereof, which can be converted into oxide by decomposition or oxidization at high temperature. When the metal compound is halide such as fluoride and chloride, a phosphor II having a high crystallinity or large average particle diameter is obtained.

Mixing, for example, may be conducted by using ball mill, V-shaped blender, or agitator. The mixing may be conducted in dry process or wet process, and preferably dry process.

The calcination may be conducted at 900 °C or more and preferably 1500 °C or less; and for 1 hour or more and 100 hours or less. The calcination may be conducted under an inert gas atmosphere such as nitrogen and argon; an oxidative atmosphere such as air, oxygen, nitrogen containing oxygen, and argon containing oxygen; and a reduction atmosphere such as a nitrogen containing hydrogen of 0.1 to 10% by volume or an argon containing hydrogen of 0.1 to 10% by volume; and preferably under a reduction atmosphere. Before calcination, the mixture of the metal compounds may be added with an appropriate amount of carbon. The addition of the carbon allows to conduct the calcination under a strong reduction atmosphere. To enhance crystallinity of the phosphor, the mixture of the metal compounds may be added with an appropriate amount of flux before calcination. Examples of the flux include LiF, NaF, KF, LiCl, NaCl, KCl, $Li_2CO_3$, $Na_2CO_3$, $K_2CO_3$, $NaHCO_3$, $NH_4F \cdot HF$, $NH_4Cl$, $NH_4I$, $MgF_2$, $CaF_2$, $SrF_2$, $BaF_2$, $MgCl_2$, $CaCl_2$, $SrCl_2$, $BaCl_2$, $MgI_2$, $CaI_2$, $SrI_2$, and $BaI_2$. The obtained phosphor II has typically an average particle diameter of about 0.1 to about 2 μm. Use of the flux allows to provide a phosphor II having an average particle diameter of about 10 μm or more. The calcination may be conducted twice or more. The phosphor with enhanced brightness is obtained by conducting calcination twice or more

When the metal compound is the compound such as hydroxide, carbonate, nitrate, chloride, oxalate thereof, which can be converted into oxide by decomposition at high temperature, the metal compound may be pre-calcined before calcination. The precalcination may be conducted under conditions of converting the metal compound into an oxide thereof or of removing crystal water thereof, for example, may be treated at temperature of 400 °C or more and less than the calcination temperature. The calcination may be conducted under any of an inert gas atmosphere, oxidative atmosphere such as ambient atmosphere, and reduction atmosphere.

The obtained product by calcination may be ground. Grinding may be conducted, for example, by using ball mill and jet-mill. Moreover, the product may be washed or classified.

**Phosphor paste**

The phosphor paste of the present invention includes the phosphor I or phosphor II mentioned above, and typically includes the phosphor and an organic compound.

The organic compound is, for example, a solvent or binder.

Examples of the solvent include monohydric alcohol having a high boiling point; polyhydric alcohol such as diols and triols which is represented by ethylene glycol, glycerine; and compound of etherified or esterified alcohol (such as ethyleneglycol monoalkyl ether, ethyleneglycol dialkyl ether, ethyleneglycol alkylether acetate, diethyleneglycol monoalkyl ether acetate, diethyleneglycol dialkyl ether, propyleneglycol monoalkyl ether, propyleneglycol dialkyl ether, and propyleneglycol alkyl acetate).

Examples of the binder include cellulose resin (such as ethyl cellulose, methyl cellulose, cellulose nitrate, acetyl cellulose, cellulose propionate, hydroxypropylcellulose, butylcellulose, benzylcellulose, and denaturation cellulose), acrylic resin (polymer composed of at least one kind of monomer such as acrylic acid, methacrylic acid, methylacrylate, methylmethacrylate, ethylacrylate, ethylmethacrylate, propylacrylate, propylmethacrylate, isopropylacrylate, isopropylmethacrylate, n-butylacrylate, n-butylmethacrylate, tert-butylacrylate, tert-butylmethacrylate, 2-hydroxyethylacrylate, 2-hydroxyethylmethacrylate, 2-hydroxypropylacrylate, 2-hydroxypropylmethacrylate, benzylacrylate, benzylmethacrylate, phenoxyacrylate, phenoxymethacrylate, isobornylacrylate, isobornylmethacrylate, glycidylmethacrylate, styrene, α-methylstyrene acrylamide, metaacrylamide, acrylonitrile, and metaacrylonitrile), ethylene-vinylacetate copolymer resin, polyvinyl butyral, polyvinyl alcohol, propylene glycol, polyethylene oxide, urethane resin, melamine resin, and phenol resin.

The phosphor paste may be prepared by mixing the phosphor I or phosphor II, a binder and a solvent, for example, according to JP H10-255671. The mixing may be conducted by using ball mill or three-roll mill.

A phosphor layer is prepared by applying the phosphor paste on a substrate and heat-treating the phosphor paste. The phosphor layer retains the characteristics of the phosphor. For example, a phosphor layer is formed using a phosphor paste containing the phosphor II, and the phosphor layer has a small decrease in brightness under exposure to a plasma or vacuum ultraviolet.

The substrate, for example, may be made of glass or resin film and be in a form of plate or container, or flexible.

The application may be conducted, for example, by screen printing or ink-jet.

The heat-treatment may be conducted under conditions of vaporizing, burning, or decomposing the organic material contained in the phosphor paste as well as of not spoiling the characteristics (such as emission property) of the phosphor. The phosphor paste may be heated at 300 °C to 600 °C. After application and before heat-treatment, the phosphor paste may be dried at a room temperature to 300°C.

## Light-emitting device

The light-emitting device of the present invention includes the phosphor I and phosphor II, and typically includes an electrode and the phosphor. Examples of the light-emitting device include vacuum ultraviolet-excited light-emitting device such as PDP and rare gas lamp; electron-beam-excited light-emitting device such as field emission display; and ultraviolet-excited light-emitting device such as high load fluorescent lamp which is a small fluorescent lamp with a high power consumption per unit area of the lamp wall. Furthermore, the light-emitting device may further include a light emitting diode (blue LED, ultraviolet LED and the like) as an excitation source.

The PDP includes a rear plate, phosphor layer, transparent electrode, bus electrode, dielectric layer, and face plate. Such PDP may be fabricated according to the method described in JP H10-195428. The method for fabricating a PDP, for example, includes the following steps of (a) to (c):

(a) applying a blue light-emitting phosphor paste, a red light-emitting phosphor paste and a green light-emitting phosphor paste, respectively, (by a screen printing or the like) to a barrier rib and a substrate surface which is the inner surface of the rear plate and is partitioned with the barrier rib, is provided with an address electrode, and is in the form of stripe, followed by calcination at temperature of about 300 °C to about 600 °C to form a phosphor layer;

(b) combining the rear plate with a face glass plate provided with the transparent electrode and the bus electrode in a direction perpendicular to the phosphor layer and provided with a dielectric layer and a protection layer on the inner surface thereof; and

(c) evacuating a space between the face glass plate and the rear plate of air, charging the space with low pressure rare gas such as Xe, Ne therein to form a discharge space.

The rare gas lamp may also be fabricated by a method similar to a conventional method, except that the above phosphor paste is used as a material.

The field emission display may be fabricated, for example, according to the method described in JP 2002-138279. The method for fabricating a field emission display, for example, includes the following steps of (d) to (g):

(d) preparing a blue light-emitting phosphor paste, a green light-emitting phosphor paste, and a red light-emitting phosphor paste by dispersing blue light-emitting phosphor, green light-emitting phosphor, and red light-emitting phosphor in an aqueous polyvinylalcohol solution and the like, respectively;

(e) applying the phosphor pastes on a glass substrate, and heat-treating them to obtain a face plate formed phosphor layers therein;

(f) arranging a support member between the face plate and a rear plate provided with a plurality of electron guns, and combining them; and

(g) evacuating a space between the face plate and the rear plate of air, and sealing air-tightly.

The high load fluorescent lamp may be fabricated, for example, according to the method described in JP H10-251636. The method for fabricating a high load fluorescent lamp, for example, includes the following steps of (h) to (l):

(h) preparing a phosphor paste by dispersing by dispersing blue light-emitting phosphor, green light-emitting phosphor, and red light-emitting phosphor in an aqueous polyvinylalcohol solution and the like;

(i) applying the phosphor paste on an inner wall of a glass tube, and then drying;

(j) heat-treating the glass tube at 300 to 600°C to form a phosphor layer on the inner wall thereof;

(k) disposing a filament in the glass tube; and

(l) evacuating the glass tube of air, charging low pressure rare gas such as Ar, Kr, Ne, and mercury therein, and then fixing caps on the glass tube to form a discharge space.

The light-emitting device having a LED such as white LED as an excitation source may be fabricated, for example, according to the methods described in JP H5-152609 and H7-99345. In the method, the phosphor I or the phosphor II may be dispersed in a translucent resin such as epoxy resin, polycarbonate, and silicone rubber to obtain a resin composition, and then the resin composition may be molded on a blue LED or ultraviolet LED.

EXAMPLES

The present invention will be explained in more detail according to Examples, but should not be construed to be limited thereto.

Phosphor I

Reference 1

Calcium carbonate (manufactured by Ube Material Industries, Ltd., $CaCO_3$), strontium carbonate (manufactured by Wako Pure Chemical Industries Ltd., $SrCO_3$), europium oxide (manufactured by Shin-Etsu Chemical Co., Ltd., $Eu_2O_3$), magnesium carbonate (manufactured by Kyowa Chemical Industry Co. Ltd., $MgCO_3$) and silicon oxide (manufactured by NIPPON AEROSIL CO.,LTD., $SiO_2$) were weighed for a molar ratio of $CaCO_3:SrCO_3:Eu_2O_3:MgCO_3:SiO_2$ to satisfy 0.892:0.1:0.004:1:2, and then mixed. The mixture was calcined under $N_2$ atmosphere containing $H_2$ of 2% by volume at 1180 °C for 2 hours, cooled down to the room temperature (25 °C), and then calcined under $N_2$ atmosphere containing $H_2$ of 2% by volume at 1180 °C for 2 hours to obtain a phosphor (1) containing $Ca_{0.892}Sr_{0.1}Eu_{0.008}MgSi_2O_6$ (where, in the formula (1), a=0.892 and b=0.1).

[Brightness evaluation of phosphor]

The phosphor (1) emitted a blue light when being irradiated with a vacuum ultraviolet using an excimer 146 nm lamp (manufactured by USHIO INC., type: H0012) in a vacuum chamber of 6.7 Pa (5 x $10^{-2}$ Torr) or less at a room temperature. The brightness $L_{146nm}$ of this sample was referred to as 100.

The phosphor (1) emitted a blue light when being irradiated with a vacuum ultraviolet using an excimer 172 nm lamp (manufactured by USHIO INC., type: H0016) in a vacuum chamber of 6.7 Pa (5 x $10^{-2}$ Torr) or less at a room temperature. The brightness $L_{172nm}$ of this sample was referred to as 100.

The phosphor (1) emitted a blue light when being irradiated with a vacuum ultraviolet using the excimer 146 nm lamp (manufactured by USHIO INC., type: H0012) in a vacuum chamber of 6.7 Pa (5 x $10^{-2}$ Torr) or less at 100°C. The brightness $L_{146nm(100°C)}$ of this sample was referred to as 100.

Example 1

Calcium carbonate (manufactured by Ube Material Industries, Ltd., $CaCO_3$), strontium carbonate (manufactured by Wako Pure Chemical Industries Ltd., $SrCO_3$), europium oxide (manufactured by Shin-Etsu Chemical Co., Ltd., $Eu_2O_3$), magnesium carbonate (manufactured by Kyowa Chemical Industry Co. Ltd., $MgCO_3$) and silicon oxide (manufactured by NIPPON Aerosil K.K., $SiO_2$) were weighed for a molar ratio of $CaCO_3:SrCO_3:Eu_2O_3:MgCO_3:SiO_2$ to satisfy 0.48:0.5:0.01:1:2, and then mixed. The mixture was calcined under $N_2$ atmosphere containing $H_2$ of 2% by volume at 1100 °C for 2 hours, cooled down to the room temperature (25 °C), and then calcined under $N_2$ atmosphere containing $H_2$ of 2% by volume at 1100 °C for 2 hours to obtain a phosphor (2) containing $Ca_{0.48}Sr_{0.5}Eu_{0.02}MgSi_2O_6$ (where, in the formula (1), a=0.48 and b=0.5).

Of the phosphor (2), $L_{146nm}$, $L_{172nm}$, and $L_{146nm(100°C)}$ were measured under the same conditions as [Brightness evaluation of phosphor] of Reference 1. The results were shown in Tables 1, 2, and 3.

Table 1

| | | Composition | $L_{146nm}$ |
|---|---|---|---|
| Reference 1 | Phosphor (1) | $Ca_{0.892}Sr_{0.1}Eu_{0.008}MgSi_2O_6$ | 100 |
| Example 1 | Phosphor (2) | $Ca_{0.48}Sr_{0.5}Eu_{0.02}MgSi_2O_6$ | 106 |

(continued)

|  | | Composition | $L_{146nm}$ |
|---|---|---|---|
| Example 2 | Phosphor (3) | $Ca_{0.49}Sr_{0.49}Eu_{0.02}MgSi_2O_6$ | 111 |
| Example 3 | Phosphor (4) | $Ca_{0.48}Sr_{0.48}Eu_{0.04}MgSi_2O_6$ | 109 |
| Reference 2 | Phosphor (5) | $Ca_{0.592}Sr_{0.4}Eu_{0.008}MgSi_2O_6$ | 73 |
| Example 4 | Phosphor (6) | $Ca_{0.494}Sr_{0.494}Eu_{0.012}MgSi_2O_6$ | 116 |

Table 2

|  | | Composition | $L_{146nm}$ |
|---|---|---|---|
| Reference 1 | Phosphor (1) | $Ca_{0.892}Sr_{0.1}Eu_{0.008}MgSi_2O_6$ | 100 |
| Example 1 | Phosphor (2) | $Ca_{0.48}Sr_{0.5}Eu_{0.02}MgSi_2O_6$ | 163 |
| Example 2 | Phosphor (3) | $Ca_{0.49}Sr_{0.49}Eu_{0.02}MgSi_2O_6$ | 214 |
| Example 3 | Phosphor (4) | $Ca_{0.48}Sr_{0.48}Eu_{0.04}MgSi_2O_6$ | 199 |
| Example 4 | Phosphor (6) | $Ca_{0.494}Sr_{0.494}Eu_{0.12}MgSi_2O_6$ | 193 |

Table 3

|  | | Composition | $L_{146nm}$ |
|---|---|---|---|
| Reference 1 | Phosphor (1) | $Ca_{0.892}Sr_{0.1}Eu_{0.008}MgSi_2O_6$ | 100 |
| Example 1 | Phosphor (2) | $Ca_{0.48}Sr_{0.5}Eu_{0.02}MgSi_2O_6$ | 114 |
| Example 2 | Phosphor (3) | $Ca_{0.49}Sr_{0.49}Eu_{0.02}MgSi_2O_6$ | 129 |
| Example 3 | Phosphor (4) | $Ca_{0.48}Sr_{0.48}Eu_{0.04}MgSi_2O_6$ | 146 |
| Example 4 | Phosphor (6) | $Ca_{0.494}Sr_{0.494}Eu_{0.012}MgSi_2O_6$ | 160 |

Example 2

Except for changing the molar ratio of $CaCO_3:SrCO_3:Eu_2O_3:MgCO_3:SiO_2$ to 0.49:0.49:0.01:1:2, and calcination temperature to 1160°C in Example 1, with the same manner, a phosphor (3) containing $Ca_{0.49}Sr_{0.49}Eu_{0.02}MgSi_2O_6$ (where, in the formula (1), a=0.49 and b=0.49) was obtained.
Of the phosphor (3), brightness was measured under the same conditions as [Brightness evaluation of phosphor] of Reference 1. The results were shown in Tables 1, 2, and 3.

Example 3

Except for changing the molar ratio of $CaCO_3:SrCO_3:Eu_2O_3:MgCO_3:SiO_2$ to 0.48:0.48:0.02:1:2, and calcination temperature to 1150°C in Example 1, with the same manner, a phosphor (4) containing $Ca_{0.48}Sr_{0.48}Eu_{0.04}MgSi_2O_6$ (where, in the formula (1), a=0.48 and b=0.48) was obtained.
Of the phosphor (4), brightness was determined under the same conditions as [Brightness evaluation of phosphor] of Reference 1. The results were shown in Tables 1, 2, and 3.

Reference 2

Except for changing the molar ratio of $CaCO_3:SrCO_3:Eu_2O_3:MgCO_3:SiO_2$ to 0.592:0.4:0.004:1:2 in Reference 1, with the same manner, a phosphor (5) containing $Ca_{0.592}Sr_{0.4}Eu_{0.008}MgSi_2O_6$ (where, in the formula (1), a=0.592 and b=0.4) was obtained.
Of the phosphor (5), $L_{146nm}$ was measured under the same conditions as [Brightness evaluation of phosphor] of Reference 1. The result was shown in Table 1.

Example 4

Except for changing the molar ratio of $CaCO_3:SrCO_3:Eu_2O_3:MgCO_3:SiO_2$ to 0.494:0.494:0.006:1:2, and a baking temperature to 1150 °C in Example 1, with the same manner, a phosphor (6) containing $Ca_{0.494}Sr_{0.494}Eu_{0.012}MgSi_2O_6$ (where, in the formula (1), a=0.494 and b=0.494) was obtained.
Of the phosphor (6), brightness was measured under the same conditions as [Brightness evaluation of phosphor] of Reference 1. The results were shown in Tables 1, 2, and 3.

Phosphor II

Reference 3

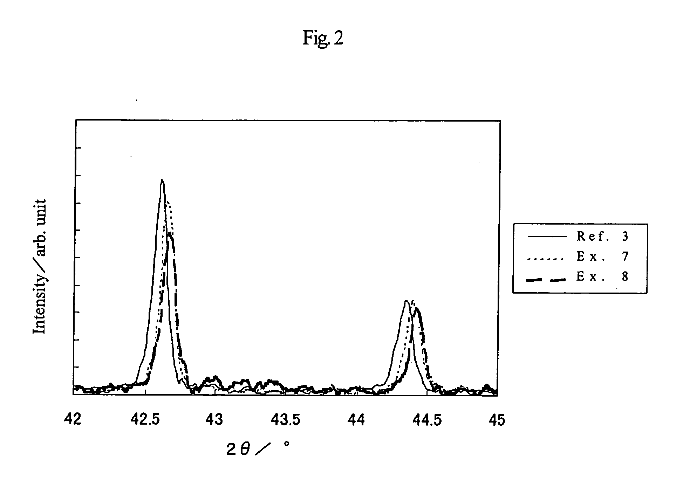

Barium carbonate (manufactured by Nippon Chemical Industrial CO., LTD., purity of 99% or more), calcium carbonate (manufactured by Ube Material Industries, Ltd., purity of 99.9%), basic magnesium carbonate (manufactured by Kyowa Chemical Industry Co. Ltd., purity of 99% or more), silicon dioxide (manufactured by NIPPON Aerosil K.K., purity of 99.99%), and europium oxide (manufactured by Shin-Etsu Chemical Co., Ltd., purity of 99.99%) were weighed for a molar ratio of Ba:Ca:Mg:Si:Eu to satisfy 0.98:2.0:1.0:2.0:0.02, mixed by using a dry ball mill for 4 hours, and then separated from grinding media to obtain a mixed powder. The mixed powder was calcined in an alumina boat under $N_2$ atmosphere containing $H_2$ of 2% by volume at 1200 °C for 2 hours, cooled down to a room temperature to obtain a phosphor (7) containing $(Ba_{0.93}Eu_{0.02})Ca_2MgSi_2O_8$
(where, in the formula (3), $M^1$ was combination of Ba and Ca, a=0.02 and b=c=0).
The phosphor (7) had an average particle diameter of 0.6 $\mu$m. The average particle diameter was measured as follows: observing particles with a scanning electron microscope (manufactured by JEOL Ltd., JSM-5500), selecting 50 particles from a picture taken, measuring diameters of the selected particles, and averaging the diameters.
The X-ray diffraction pattern of the phosphor (7) is shown in Fig. 2. The X-ray diffraction pattern was measured by using a powder X-ray diffractometer with CuK$\alpha$ as radiation source (manufactured by Rigaku Corporation, RINT2500TTR type).

[Brightness evaluation 1 of phosphor]

The brightness $L_o$ of the phosphor obtained was measured.
The phosphor was heat-treated under an air atmosphere at 500 °C for 30 minutes. The brightness $L_{HT}$ of the phosphor after the heat-treatment was measured. Thereafter, the phosphor was subjected to a plasma exposure treatment by exposing to the plasma of 50 W under a pressure of 13.2 Pa and atmosphere of 5% by volume Xe-95% by volume Ne for 15 minutes. THe brightness $L_{PT}$ of the phosphor after the plasma treatment was measured as follows:

The phosphor was placed in a vacuum chamber, and irradiated with vacuum ultraviolet using a 146 nm lamp (manufactured by USHIO INC., type:H0012) under a pressure of 6.7 Pa (5 x $10^{-2}$ torr) or less. The brightness of the phosphor was measured by using a spectroradiometer (manufactured by TOPCON CORPORATION, SR-3). The brightness of the phosphor (7) was referred to as 100.
The result was shown in Table 4.

[Brightness evaluation 2 of phosphor]

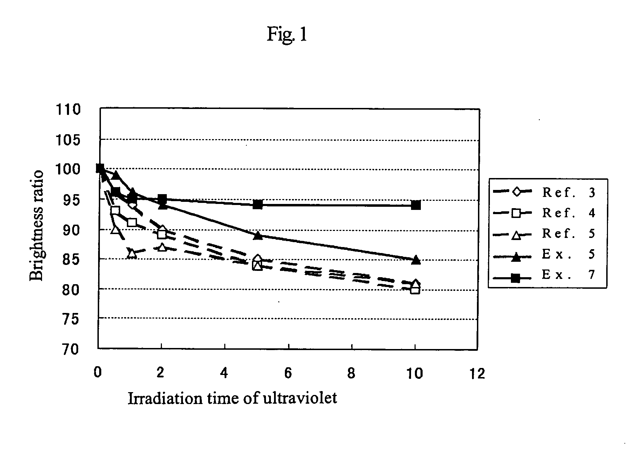

Of the phosphor obtained above, a brightness variation with time under irradiation of vacuum ultraviolet with a wavelength of 146 nm was measured. The result was shown in Fig. 1.

[Formation of phosphor layer and brightness evaluation]

A phosphor paste was prepared by mixing 100 parts by weight of the phosphor obtained above, 20 parts by weight of ethylcellulose, and 160 parts by weight of a mixture of diethyleneglycol mono-n-butylether and diethyleneglycol mono-n-butylether acetate. The phosphor paste was applied on a glass substrate, dried at 100 °C, and then heat-treated at 500 °C under an ambient atmosphere for 30 minutes to form a phosphor layer with a thickness of 20 $\mu$m. The brightness $L_{LA}$ of the phosphor layer was measured as follows:

The glass substrate with the phosphor layer formed thereon was placed in a vacuum chamber and the phosphor layer was irradiated with vacuum ultraviolet using a 146 nm lamp (manufactured by USHIO INC., type: H0012), under pressure of 6.7 Pa (5 x $10^{-2}$ torr) or less. The brightness of the phosphor layer was measured using a spectroradiometer (manufactured by TOPCON CORPORATION, SR-3). The brightness of the phosphor (7) was referred to as 100.

The results were shown in Table 5.

Table 4

| | | Composition |
|---|---|---|
| Reference 3 | Phosphor (7) | $(Ba_{0.98}Eu_{0.02})Ca_2MgSi_2O_8$ |
| Reference 4 | Phosphor (8) | $(Ba_{0.48}Sr_{0.5}Eu_{0.02})Sr_2MgSi_2O_8$ |
| Reference 5 | Phosphor (9) | $(Ba_{0.98}Eu_{0.02})Ca_2MgLa_{0.03}Si_2O_{8.05}$ (La9700ppm) |
| Reference 6 | Phosphor (10) | $(Ba_{0.98}Eu_{0.02})Ca_2MgAl_{0.05}Si_2O_{8.08}$ |
| Example 5 | Phosphor (11) | $(Ba_{0.98}Eu_{0.02})Ca_2Mg_{1.1}Si_2O_{8.1}$ |
| Example 6 | Phosphor (12) | $(Ba_{0.98}Eu_{0.02})Ca_2MgSi_{2.06}O_{8.12}$ |
| Example 7 | Phosphor (13) | $(Ba_{0.98}Eu_{0.02})Ca_2MgSi_{2.1}O_{8.2}$ |
| Example 8 | Phosphor (14) | $(Ba_{0.98}Eu_{0.02})Ca_2MgSi_{2.2}O_{8.4}$ |
| Example 9 | Phosphor (15) | $(Ba_{0.48}Sr_{0.5}Eu_{0.02})Sr_2Mg_{1.1}Si_2O_{8.1}$ |
| Example 10 | Phosphor (16) | $(Ba_{0.48}Sr_{0.5}Eu_{0.02})Sr_2Mg_{1.1}Si_2O_{8.1}$ |
| Example 11 | Phosphor (17) | $(Ba_{0.98}Eu_{0.02})Ca_2Mg_{1.1}La_{0.03}Si_2O_{8.15}$ (La9700 ppm) |
| Example 12 | Phosphor (18) | $(Ba_{0.48}Sr_{0.5}Eu_{0.02})Sr_2Mg_{1.05}Y_{0.03}Si_2O_{8.1}$ (Y5300ppm) |
| Example 13 | Phosphor (19) | $(Ba_{0.48}Sr_{0.5}Eu_{0.02})Sr_2Mg_{1.05}Al_{0.03}Si_2O_{8.1}$ (Al 1600ppm) |

Table 4 (continued)

| | Color of emitted light | Initial brightness $L_0$ | Brightness $L_{HT}$ after heat treatment | Brightness $L_{PT}$ after heat and plasma treatments | Brightness ratio $L_{PT}/L_0$ (%) |
|---|---|---|---|---|---|
| Reference 3 | Blue | 100 | 100 | 85 | 85 |
| Reference 4 | Blue | 121 | 120 | 104 | 86 |
| Reference 5 | Blue | 37 | 30 | 25 | 68 |
| Reference 6 | Blue | 70 | 70 | 60 | 86 |
| Example 5 | Blue | 95 | 96 | 90 | 95 |
| Example 6 | Blue | 96 | 96 | 88 | 92 |
| Example 7 | Blue | 91 | 92 | 88 | 97 |
| Example 8 | Blue | 88 | 90 | 83 | 94 |
| Example 9 | Blue | 114 | 114 | 108 | 95 |
| Example 10 | Blue | 116 | 116 | 110 | 95 |
| Example 11 | Blue | 41 | 43 | 39 | 95 |
| Example 12 | Blue | 118 | 120 | 114 | 97 |
| Example 13 | Blue | 113 | 113 | 109 | 96 |

Table 5

| | Initial brightness $L_0$ | Brightness $L_{LA}$ of phosphor layer | Brightness ratio $L_{LA}/L_0$ (%) |
|---|---|---|---|
| Reference 3 | 100 | 68 | 68 |
| Reference 4 | 121 | 66 | 55 |
| Reference 5 | 37 | 24 | 65 |
| Reference 6 | 70 | 47 | 67 |
| Example 5 | 95 | 73 | 77 |
| Example 6 | 96 | 72 | 75 |
| Example 7 | 91 | 70 | 77 |
| Example 8 | 88 | 69 | 78 |
| Example 9 | 114 | 81 | 71 |

(continued)

|  | Initial brightness $L_o$ | Brightness $L_{LA}$ of phosphor layer | Brightness ratio $L_{LA}/Lo$ (%) |
|---|---|---|---|
| Example 10 | 116 | 85 | 73 |
| Example 11 | 41 | 39 | 95 |
| Example 12 | 118 | 87 | 74 |
| Example 13 | 113 | 79 | 70 |

Reference 4

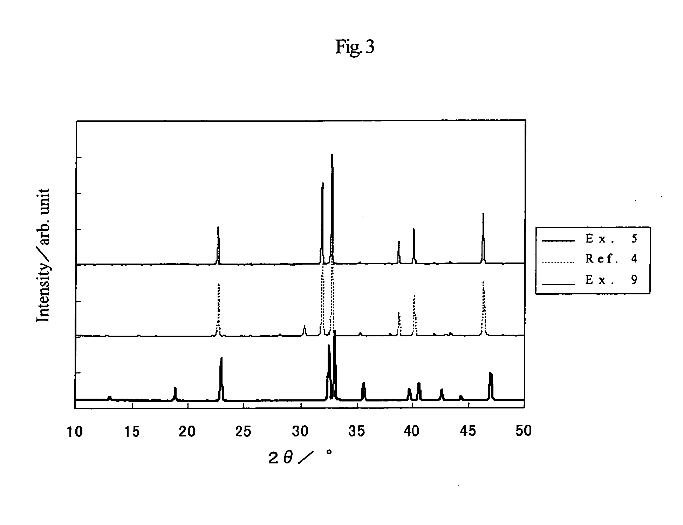

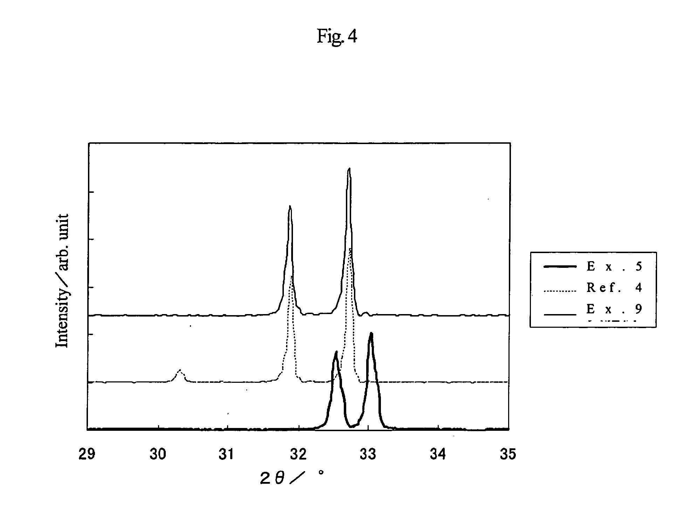

Except for weighing barium carbonate (manufactured by Nippon Chemical Industrial CO.,LTD., purity of 99% or more), strontium carbonate (manufactured by Sakai Chemical Industry Co., Ltd., purity of 99% or more), basic magnesium carbonate (manufactured by Kyowa Chemical Industry Co. Ltd., purity of 99% or more), silicon dioxide (manufactured by NIPPON Aerosil K.K., purity of 99.99%), and europium oxide (manufactured by Shin-Etsu Chemical Co., Ltd., purity of 99.99%) for a molar ratio of Ba:Sr:Mg:Si:Eu to satisfy 0.48:2.5:1.0:2.0:0.02, with the same manner in Reference 3, a phosphor (8) containing $(Ba_{0.48}Sr_{0.5}Eu_{0.02}) Sr_2MgSi_2O_8$
(where, in the formula (3), $M^1$ was combination of Ba and Sr, a=0.02 and b=c=0) was obtained.
The phosphor (8) had an average particle diameter of 0. 4 $\mu$m. The X-ray diffraction patterns of the phosphor (8) were shown in Figs. 3 and 4. Of the phosphor (8), the brightness was measured under the same conditions as [Brightness evaluation 1 of phosphor] of Reference 3. The result was shown in Table 4. Of the phosphor (8), the brightness was measured under the same conditions as [Brightness evaluation 2 of phosphor] of Reference 3. The result was shown in Fig. 1.
Of the phosphor (8), the brightness was measured under the same conditions as [Formation of phosphor layer and brightness evaluation] of Reference 3. The result was shown in Table 5.

Reference 5

Except for weighing barium carbonate (manufactured by Nippon Chemical Industrial CO.,LTD., purity of 99% or more), calcium carbonate (manufactured by Ube Material Industries, Ltd. , purity of 99.9%), basic magnesium carbonate (manufactured by Kyowa Chemical Industry Co. Ltd., purity of 99% or more), silicon dioxide (manufactured by NIPPON Aerosil K.K., purity of 99.99%), europium oxide (manufactured by Shin-Etsu Chemical Co., Ltd. , purity of 99.99%), and lanthanum oxide (manufactured by Shin-Etsu Chemical Co., Ltd., purity of 99.99%) for a molar ratio of Ba:Ca:Mg:Si:Eu:La to satisfy 0.98:2.0:1.0:2.0:0.02:0.03, with the same manner as Reference 3, a phosphor (9) containing $(Ba_{0.98}Eu_{0.02})Ca_2MgLa_{0.03}Si_2O_{8.05}$ (where, in the formula (3), $M^1$ was combination of Ba and Ca, a=0.02 and b=c=0, containing 3 mol% of La to the phosphor) was obtained.
The phosphor (9) had an average particle diameter of 0.8 $\mu$m. Of the phosphor (9), the brightness was measured under the same conditions as [Brightness evaluation 1 of phosphor] of Reference 3. The result was shown in Table 4. Of the phosphor (9), the brightness was measured under the same conditions as [Brightness evaluation 2 of phosphor] of Reference 3. The result was shown in Fig. 1.
Of the phosphor (9), the brightness was measured under the same conditions as [Formation of phosphor layer and brightness evaluation] of Reference 3. The result was shown in Table 5.

Reference 6

Except for weighing barium carbonate (manufactured by Nippon Chemical Industrial CO.,LTD., purity of 99% or more), calcium carbonate (manufactured by Ube Material Industries, Ltd., purity of 99.9%), basic magnesium carbonate (manufactured by Kyowa Chemical Industry Co. Ltd., purity of 99% or more), silicon dioxide (manufactured by NIPPON Aerosil K.K., purity of 99.99%), europium oxide (manufactured by Shin-Etsu Chemical Co., Ltd., purity of 99.99a), and aluminum hydroxide (manufactured by Sumitomo Chemical Co., Ltd., purity of 99% or more) for a molar ratio of Ba:Ca: Mg:Si:Eu:Al to satisfy 0.98:2.0:1.0:2.0:0.02:0.05, with the same manner as Reference 3, a phosphor (10) containing $(Ba_{0.98}Eu_{0.02})Ca_2MgAl_{0.05}Si_2O_{8.08}$ (where, in the formula (3), $M^1$ was combination of Ba and Ca, a=0.02 and b=c=0, containing 5 mol% of Al to the phosphor) was obtained.
The phosphor (10) had an average particle diameter of 0.7 $\mu$m. Of the phosphor (10), the brightness was measured under the same conditions as [Brightness evaluation 1 of phosphor] of Reference 3. The result was shown in Table 4.
Of the phosphor (10), the brightness was measured under the same conditions as [Formation of phosphor layer and brightness evaluation] of Reference 3. The result was shown in Table 5.

Example 5

Except for weighing barium carbonate (manufactured by Nippon Chemical Industrial CO.,LTD., purity of 99% or more), calcium carbonate (manufactured by Ube Material Industries, Ltd., purity of 99.9%), basic magnesium carbonate (manufactured by Kyowa Chemical Industry Co. Ltd., purity of 99% or more), silicon dioxide (manufactured by NIPPON Aerosil K.K., purity of 99.99%), and europium oxide (manufactured by Shin-Etsu Chemical Co., Ltd., purity of 99.99%) for a molar ratio of Ba:Ca:Mg:Si:Eu to satisfy 0.98:2.0:1.1:2.0:0.02, with the same manner applied in Comparative Example 3, a phosphor (11) containing $(Ba_{0.98}Eu_{0.02})Ca_2Mg_{1.1}Si_2O_{8.1}$
(where, in the formula (3), $M^1$ was combination of Ba and Ca, a=0.02, b=0.1, and c=0) was obtained.
The phosphor (11) had an average particle diameter of 0.9 $\mu$m. The X-ray diffraction patterns of the phosphor (11) were shown in Figs. 3 and 4. As shown in Figs. 3 and 4, in the powder X-ray diffraction patterns of the phosphor (11), the maximum diffraction peak having the strongest intensity was present in a range of 32° to 33.5° in terms of diffraction angle 2θ, and no peaks was present in a range of 29° to 31°.
Of the phosphor (11), the brightness was measured under the same conditions as [Brightness evaluation 1 of phosphor] of Reference 3. The result was shown in Table 4. Of the phosphor (11), the brightness was measured under the same conditions as [Brightness evaluation 2 of phosphor] of Reference 3. The result was shown in Fig. 1.
Of the phosphor (11), the brightness was measured under the same conditions as [Formation of phosphor layer and brightness evaluation] of Reference 3. The result was shown in Table 5.

Example 6

Except for changing the molar ratio of Ba: Ca: Mg: Si: Eu to 0.98:2.0:1.0:2.06:0.02 in Example 5, with the same manner, a phosphor (12) containing. $(Ba_{0.98}Eu_{0.02})Ca_2MgSi_{2.06}O_{8.12}$
(where, in the formula (3), $M^1$ was combination of Ba and Ca, a=0.02, b=0, and c=0.06) was obtained.
The phosphor (12) had an average particle diameter of 1.0 $\mu$m. Of the phosphor (12), the brightness was measured under the same conditions as [Brightness evaluation 1 of phosphor] of Reference 3. The result was shown in Table 4.
Of the phosphor (12), the brightness was measured under the same conditions as [Formation of phosphor layer and brightness evaluation] of Reference 3. The result was shown in Table 5.

Example 7

Except for changing the molar ratio of Ba: Ca: Mg: Si: Eu to 0.98:2.0:1.0:2.1:0.02 in Example 5, with the same manner, a phosphor (13) containing $(Ba_{0.98}Eu_{0.02})Ca_2MgSi_{2.1}O_{8.2}$ (where, in the formula (3), $M^1$ was combination of Ba and Ca, a=0.02, b=0, and c=0.1) was obtained.
The phosphor (13) had an average particle diameter of 1.2 $\mu$m. The X-ray diffraction pattern of the phosphor (13) was shown in Fig. 2. As shown in Fig. 2, the diffraction peak of the phosphor (13) in the X-ray diffraction pattern thereof shifted to a higher angle side compared with that of the phosphor (7); consequently, the lattice constant of the phosphor (13) was different from that of the phosphor (7).
Of the phosphor (13), the brightness was measured under the same conditions as [Brightness evaluation 1 of phosphor] of Reference 3. The result was shown in Table 4. Of the phosphor (13), the brightness was measured under the same conditions as [Brightness evaluation 2 of phosphor] of Reference 3. The result was shown in Fig. 1.
Of the phosphor (13), the brightness was measured under the same conditions as [Formation of phosphor layer and brightness evaluation] of Reference 3. The result was shown in Table 5.

Example 8

Except for changing the molar ratio of Ba:Ca:Mg:Si:Eu to 0.98:2.0:1.0:2.2:0.02 in Example 5, with the same manner, a phosphor (14) containing $(Ba_{0.98}Eu_{0.02})Ca_2MgSi_{2.2}O_{8.4}$ (where, in the formula (3), $M^1$ was combination of Ba and Ca, a=0.02, b=0, and c=0.2) was obtained.
The phosphor (14) had an average particle diameter of 1.3 $\mu$m. The X-ray diffraction pattern of the phosphor (14) was shown in Fig. 2. As shown in Fig. 2, the diffraction peak of the phosphor (14) in the X-ray diffraction pattern thereof shifted to a higher angle side compared with that of the phosphor (7); consequently, the lattice constant of the phosphor (14) was different from that of the phosphor (7).
Of the phosphor (14), the brightness was measured under the same conditions as [Brightness evaluation 1 of phosphor] of Reference 3. The result was shown in Table 4.

Of the phosphor (14), the brightness was measured under the same conditions as [Formation of phosphor layer and brightness evaluation] of Reference 3. The result was shown in Table 5.

Example 9

Except for weighing barium carbonate (manufactured by Nippon Chemical Industrial CO.,LTD., purity of 99% or more), strontium carbonate (manufactured by Sakai Chemical Industry Co., Ltd., purity of 99% or more), basic magnesium carbonate (manufactured by Kyowa Chemical Industry Co. Ltd., purity of 99% or more), silicon dioxide (manufactured by NIPPON Aerosil K.K., purity of 99.99%), and europium oxide (manufactured by Shin-Etsu Chemical Co., Ltd., purity of 99.99%) for a molar ratio of Ba:Sr:Mg:Si:Eu to satisfy 0.48:2.5:1.1:2.0:0.02, with the same manner applied in Comparative Example 3, a phosphor (15) containing $(Ba_{0.48}Sr_{0.5}Eu_{0.02})Sr_2Mg_{1.1}Si_2O_{8.1}$
(where, in the formula (3), $M^1$ was combination of Ba and Sr, a=0.02, b=0.1, and c=0) was obtained.
The phosphor (15) had an average particle diameter of 0.6 μm. The X-ray diffraction patterns of the phosphor (15) were shown in Figs. 3 and 4. As shown in Figs. 3 and 4, in the powder X-ray diffraction patterns determined for the phosphor (15), the maximum diffraction peak having the strongest intensity was present in a range of 32° to 33.5° in terms of diffraction angle 2θ, and no peaks were present in a range of 29° to 31°.
Of the phosphor (15), the brightness was measured under the same conditions as [Brightness evaluation 1 of phosphor] of Reference 3. The result was shown in Table 4.
Of the phosphor (15), the brightness was measured under the same conditions as [Formation of phosphor layer and brightness evaluation] of Reference 3. The result was shown in Table 5.

Example 10

Except for changing the molar ratio of Ba: Sr: Mg: Si: Eu to 0.48:2.5:1.0:2.1:0.02 in Example 9, with the same manner, a phosphor (16) containing $(Ba_{0.48}Sr_{0.5}Eu_{0.02})Sr_2Mg_{1.1}Si_2O_{8.1}$ (where, in the formula (3), $M^1$ was combination of Ba and Sr, a=0.02, b=0, and c=0.1) was obtained.
The phosphor (16) had an average particle diameter of 0.7 μm.
Of the phosphor (16), the brightness was measured under the same conditions as [Brightness evaluation 1 of phosphor] of Reference 3. The result was shown in Table 4.
Of the phosphor (16), the brightness was measured under the same conditions as [Formation of phosphor layer and brightness evaluation] of Reference 3. The result was shown in Table 5.

Example 11

Except for weighing barium carbonate (manufactured by Nippon Chemical Industrial CO.,LTD., purity of 99% or more), calcium carbonate (manufactured by Ube Material Industries, Ltd. , purity of 99.9%), basic magnesium carbonate (manufactured by Kyowa Chemical Industry Co. Ltd., purity of 99% or more), silicon dioxide (manufactured by NIPPON Aerosil K.K., purity of 99.99%), europium oxide (manufactured by Shin-Etsu Chemical Co., Ltd., purity of 99.99%), and lanthanum oxide (manufactured by Shin-Etsu Chemical Co., Ltd., purity of 99.99%) for a molar ratio of Ba:Ca:Mg:Si:Eu:La to satisfy 0.98:2.0:1.1:2.0:0.02:0.03, with the same manner as Reference 3, a phosphor (17) containing $(Ba_{0.98}Eu_{0.02})Ca_2Mg_{1.1}La_{0.03}Si_2O_{8.15}$ (where, in the formula (3), $M^1$ was combination of Ba and Ca, a=0.02, b=0.1, and c=0, containing 3 mol% of La to the phosphor) was obtained.
The phosphor (17) had an average particle diameter of 0.7 μm. Of the phosphor (17), the brightness was measured under the same conditions as [Brightness evaluation 1 of phosphor] of Reference 3. The result was shown in Table 4.
Of the phosphor (17), the brightness was measured under the same conditions as [Formation of phosphor layer and brightness evaluation] of Reference 3. The result was shown in Table 5.

Example 12

Except for weighing barium carbonate (manufactured by Nippon Chemical Industrial CO.,LTD., purity of 99% or more), strontium carbonate (manufactured by Sakai Chemical Industry Co., Ltd., purity of 99% or more), basic magnesium carbonate (manufactured by Kyowa Chemical Industry Co. Ltd., purity of 99% or more), silicon dioxide (manufactured by NIPPON Aerosil K.K., purity of 99.99%), europium oxide (manufactured by Shin-Etsu Chemical Co., Ltd., purity of 99.99%), and yttrium oxide (manufactured by Shin-Etsu Chemical Co., Ltd., purity of 99.99%) for a molar ratio of Ba:Sr:Mg:Si:Eu:Y to satisfy 0.98:2.5:1.05:2.0:0.02:0.03, with the same manner applied in Comparative Example 3, a phosphor (18) containing $(Ba_{0.48}Sr_{0.5}Eu_{0.02})Sr_2Mg_{1.05}Y_{0.03}Si_2O_{8.1}$ (where, in the formula (3), $M^1$ was combination of Ba and Sr, a=0.02, b=0.05, and c=0, containing 3 mol% of Y to the phosphor) was obtained.

The phosphor (18) had an average particle diameter of 0.6 $\mu$m. Of the phosphor (18), the brightness was measured under the same conditions as [Brightness evaluation 1 of phosphor] of Reference 3. The result was shown in Table 4.

Of the phosphor (18), the brightness was measured under the same conditions as [Formation of phosphor layer and brightness evaluation] of Reference 3. The result was shown in Table 5.

Example 13

Except for weighing barium carbonate (manufactured by Nippon Chemical Industrial CO.,LTD., purity of 99% or more), strontium carbonate (manufactured by Sakai Chemical Industry Co., Ltd., purity of 99% or more), basic magnesium carbonate (manufactured by Kyowa Chemical Industry Co. Ltd., purity of 99% or more), silicon dioxide (manufactured by NIPPON Aerosil K.K., purity of 99.99%), europium oxide (manufactured by Shin-Etsu Chemical Co., Ltd., purity of 99.99%), and aluminum hydroxide (manufactured by Sumitomo Chemical Co., Ltd., purity of 99% or more) for a molar ratio of Ba:Sr:Mg:Si:Eu:Al to satisfy 0.98:2.5:1.05:2.0:0.02:0.03, with the same manner applied in Comparative Example 3, a phosphor (19) containing $(Ba_{0.48}Sr_{0.5}Eu_{0.02})$ $Sr_2Mg_{1.05}Al_{0.03}Si_2O_{8.1}$ (where, in the formula (3), $M^1$ was combination of Ba and Sr, a=0.02, b=0.05, and c=0, containing 3 mol% of A1 to the phosphor) was obtained.

The phosphor (19) had an average particle diameter of 0.6 $\mu$m. Of the phosphor (19), the brightness was measured under the same conditions as [Brightness evaluation 1 of phosphor] of Reference 3. The result was shown in Table 4.

Of the phosphor (19), the brightness was measured under the same conditions as [Formation of phosphor layer and brightness evaluation] of Reference 3. The result was shown in Table 5.

**Claims**

1. A phosphor comprising a compound represented by the formula (1):

$$Ca_aSr_bEu_{1-a-b}MgSi_2O_6 \qquad (1)$$

wherein $0.4 \leqq a \leqq 0.7$, $0.4 \leqq b \leqq 0.7$, and $a+b \leqq 0.990$.

2. The phosphor according to Claim 1, wherein a is 0.46 or more and 0.52 or less, and b is 0.46 or more and 0.52 or less.

3. The phosphor according to Claim 1, wherein a is equal to b.

4. A method for producing a phosphor, comprising steps of weighing a calcium compound, a strontium compound, a europium compound, a magnesium compound, and a silicon compound with the proviso that a molar ratio of Ca:Sr:Eu:Mg:Si satisfies a:b: (1-a-b) :1:2 ($0.4 \leqq a \leqq 0.7$, $0.4 \leqq b \leqq 0.7$, $a+b \leqq 0.990$) ; mixing the compounds; and calcining the mixture under reduction atmosphere at 1100 °C to 1160°C for 0.3 to 100 hours.

5. A phosphor comprising a compound represented by the formula (2) and Eu as an activator:

$$3 (M^1O) \cdot m(M^2O) \cdot n(M^3O_2) \qquad (2)$$

wherein $M^1$ is at least one selected from the group consisting of Ca, Sr, and Ba;
$M^2$ is at least one selected from the group consisting of Mg and Zn;
$M^3$ is at least one selected from the group consisting of Si and Ge;

$$1 \leqq m \leqq 1.5;$$

$$2 \leqq n \leqq 2.6;$$

and

$$m+n>3.$$

**6.** The phosphor according to Claim 5, wherein $M^2$ is Mg.

**7.** The phosphor according to Claim 5, wherein $M^3$ is Si.

**8.** The phosphor according to Claim 5, wherein the phosphor is represented by the formula (3):

$$(M^1{}_{3-a}Eu_a)Mg_{1+b}Si_{2+c}O_{8+b+2c} \qquad (3)$$

wherein $M^1$ is at least one selected from the group consisting of Ca, Sr, andBa, $0 \leqq a \leqq 0.5$, $0 \leqq b \leqq 0.5$, $0 \leqq c \leqq 0.6$, andb+c>0.

**9.** The phosphor according to Claim 5, wherein in a powder X-ray diffraction pattern measured by using a powder X-ray diffractometer under conditions of radiation source: $CuK\alpha$, scanning range: 10° to 50° in terms of diffraction angle $2\theta$,
a maximum diffraction peak is present in a range of 32° to 33.5°, and
no peaks are substantially present in a range of 29° to 31°.

**10.** The phosphor according to Claim 5, the phosphor further comprises a co-activator.

**11.** The phosphor according to Claim 10, wherein the co-activator is at least one selected from the element group consisting of Al, Sc, Y, La, Gd, Ce, Pr, Nd, Sm, Tb, Dy, Ho, Er, Tm, Yb, Lu, Bi, and Mn.

**12.** A phosphor paste comprising any of phosphors according to Claims 1 to 3 and 5 to 11, and an organic compound.

**13.** The phosphor paste according to Claim 12, wherein the organic compound is a solvent or binder.

**14.** A light-emitting device comprising any of phosphors according to Claims 1 to 3 and 5 to 11, and an electrode.

**15.** A light-emitting device comprising any of phosphors according to Claims 1 to 3 and 5 to 11, and a light-emitting diode.

**16.** A use of any of phosphors according to Claims 1 to 3 and 5 to 11, as a light-emitting device.

**17.** The use according to Claim 16, wherein the light-emitting device is selected from vacuum ultraviolet-excited light-emitting device, electron-beam-excited light-emitting device, and ultraviolet-excited light-emitting device.

**18.** The use according to Claim 17, wherein the light-emitting device is vacuum ultraviolet-excited light-emitting device.

Fig. 1

Fig. 2

Fig. 3

Fig. 4

## INTERNATIONAL SEARCH REPORT

| International application No. |
|---|
| PCT/JP2005/016370 |

| A. CLASSIFICATION OF SUBJECT MATTER |
|---|
| *C09K11/59*(2006.01) |
| According to International Patent Classification (IPC) or to both national classification and IPC |

| B. FIELDS SEARCHED |
|---|
| Minimum documentation searched (classification system followed by classification symbols) |
| *C09K11/59*(2006.01) |

Documentation searched other than minimum documentation to the extent that such documents are included in the fields searched

| Jitsuyo Shinan Koho | 1922-1996 | Jitsuyo Shinan Toroku Koho | 1996-2005 |
|---|---|---|---|
| Kokai Jitsuyo Shinan Koho | 1971-2005 | Toroku Jitsuyo Shinan Koho | 1994-2005 |

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| X | JP 2003-238954 A (Matsushita Electric Industrial Co., Ltd.), 27 August, 2003 (27.08.03), Claims; Par. Nos. [0001], [0055]; table 1, Sample No.5 (Family: none) | 1-4,12-18 |
| X | JP 2001-518972 A (XIAO, Zhiguo), 16 October, 2001 (16.10.01), Example 8 & WO 1998/042798 A1 & EP 972815 A1 & US 6093346 A & KR 2001-5707 A | 5-18 |

| ☒ Further documents are listed in the continuation of Box C. | ☐ See patent family annex. |
|---|---|

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 07 December, 2005 (07.12.05) | 20 December, 2005 (20.12.05) |

| Name and mailing address of the ISA/ | Authorized officer |
|---|---|
| Japanese Patent Office | |
| Facsimile No. | Telephone No. |

Form PCT/ISA/210 (second sheet) (April 2005)

# EP 1 811 009 A1

## INTERNATIONAL SEARCH REPORT

C (Continuation).   DOCUMENTS CONSIDERED TO BE RELEVANT

| Category* | Citation of document, with indication, where appropriate, of the relevant passages | Relevant to claim No. |
|---|---|---|
| X | JP 48-37715 B1 (N.V. Philips' Gloeilampenfabrieken), 13 November, 1973 (13.11.73), Claims; examples (Family: none) | 5-8,12-18 |
| A | JP 2003-206480 A (Matsushita Electric Industrial Co., Ltd.), 22 July, 2003 (22.07.03), Claims; examples & EP 1353354 A1 & US 6939480 B2 & WO 2003/036675 A1 & KR 2003-070620 A | 1-18 |
| A | JP 2003-306675 A (Mitsubishi Chemical Corp.), 31 October, 2003 (31.10.03), Claims; examples; Figs. 1 to 3 & EP 1484803 A1 & US 2005-145854 A1 & WO 2003/069686 A1 | 1-18 |
| A | JP 2003-132803 A (Hitachi, Ltd.), 09 May, 2003 (09.05.03), Claims; examples & US 2003-85853 A1 & KR 2003-36017 A | 1-18 |
| A | JP 2003-336048 A (Matsushita Electric Industrial Co., Ltd.), 28 November, 2003 (28.11.03), Claims; examples & EP 1506989 A1 & US 2004-239247 A1 & WO 2003/097767 A1 & KR 2004-029177 A | 1-18 |
| A | JP 2004-26922 A (Sumitomo Chemical Co., Ltd.), 29 January, 2004 (29.01.04), Claims; examples (Family: none) | 1-18 |
| A | JP 2004-176010 A (Hitachi, Ltd.), 24 June, 2004 (24.06.04), Claims; examples (Family: none) | 1-18 |
| A | JP 61-174291 A (Sony Corp.), 05 August, 1986 (05.08.86), Claims; examples & GB 2171112 A | 1-18 |
| A | JP 49-38434 B1 (Silvania Electric Products Inc.), 17 October, 1974 (17.10.74), Table I (Family: none) | 1-18 |

Form PCT/ISA/210 (continuation of second sheet) (April 2005)

**INTERNATIONAL SEARCH REPORT**

| International application No. |
|---|
| PCT/JP2005/016370 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 64-6087 A  (Hitachi, Ltd.),<br>10 January, 1989 (10.01.89),<br>Claims<br>(Family: none) | 1-18 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004026922 A
- JP 2002332481 A
- JP H10255671 B
- JP H10195428 B

- JP 2002138279 A
- JP H10251636 B
- JP H5152609 B
- JP H799345 B

**Non-patent literature cited in the description**

- IEICE Transaction on Electronics Special Issue on Electronic Displays, The Institute of Electronics. *Information and Communication Engineers E-85-C,* November 2002, 1888-1894